# EUROPÄISCHE PATENTANMELDUNG

(11) **EP 2 107 001 A1**
(43) Veröffentlichungstag der Anmeldung: **07.10.2009**
(21) Anmeldenummer: 08154084.1
(22) Anmeldetag: 04.04.2008
(51) Int. Cl.: B64C 1/14, B64C 27/04

(54) **Verfahren zum Herstellen eines Hubschrauber-Cockpits**

(71) Anmelder: Sika Technology AG, 6340 Baar (CH)
(72) Erfinder: Konstanzer, Peter, 82024, Taufkirchen (DE); Konstanzer, Martin, 8048, Zürich (CH)
(74) Vertreter: Sika Patent Attorneys

(57) **Zusammenfassung**

Die vorliegende Erfindung betrifft ein Verfahren zum Herstellen eines Hubschrauber-Cockpits, bei welchem die Scheiben mit eines Klebstoffes, welcher ein feuchtigkeitsvernetzender einkomponentiger oder ein Isocyanatgruppen aufweisender zweikomponentiger Klebstoff ist, verklebt werden. Hierdurch werden im Cockpit herrschenden Vibrationen stark vermindert und die Steifigkeit des Cockpits strukturell verstärkt.

## Beschreibung

### Technisches Gebiet

Die Erfindung betrifft das Gebiet der Herstellung von Hubschrauber-Cockpits.

### Stand der Technik

Hubschrauber werden aus Gewichtsgründen in Leichtbauweise hergestellt. Deshalb werden Leichtmetalle und Compositematerialien schon seit langem für die Herstellung der Tragprofilstruktur, bzw. die Abdeckungen oder Verschalungsteile, verwendet.

Die meisten Hubschrauber-Cockpits bestehen im Wesentlichen aus einer kraftübertragenden (strukturellen) Tragprofilstruktur sowie Verschalungen und Scheiben, welche im Wesentlichen lediglich die Lücken in der Tragprofilstruktur abdecken. Die Scheiben eines Hubschrauber-Cockpits werden mit mechanischen Verbindungsmittel mit der Tragprofilstruktur, bzw. an mit dem Tragprofilen verbundenen Flanschen verbunden oder in Aussparungen der Abdeckungen oder Verschalungen verbunden. Typischerweise wird diese mechanische Verbindung mittels Bolzen, Schrauben, Bajonett-Verschlüsse oder ein Verklemmen vorgenommen.

DE 38 26 636 A1 offenbart eine Cockpit-Struktur, welches durch Verkleben von zwei Cockpit-Hälften erhalten wird, wodurch eine einfache Herstellungsweise eine passgenaue Tragprofilstruktur erzielt werden soll. In dieser Tragprofilstruktur, bzw. in die Aussenverschalung sind Aussparungen vorgesehen, in welche austauschbar Scheiben eingesetzt werden können.

Ein mechanisches Verbinden von Scheiben mit der Tragstruktur des Hubschraubers weist jedoch den grossen Nachteil auf, dass grosse Spannungsspitzen bei statischen und dynamischen Belastungen an Scheibe, bzw. Tragstruktur, auftreten. Aufgrund der Leichtbauweise und der durch Turbine und Rotor wirkenden Kräfte sind dies Spannungen bei Hubschraubern jedoch extrem stark ausgeprägt, so dass für den Bau von Hubschrauber-Cockpits Hubschrauber-spezifische Anforderungen relevant sind.

Infolge des Bedürfnisses der Cockpit-Insassen, insbesondere des Piloten, sich möglichst nach allen Seiten durch Sichtkontakt orientieren zu können, besteht ein grosses Bestreben den Anteil der Scheiben im Cockpit möglichst gross zu gestalten. Als Folge dessen ist der vordere Teil des Cockpits fast ausschliesslich als Scheibe konstruiert. Die dort vorhandenen Tragprofile sind jedoch nur zum Teil in der Lage, die dort wirkenden Kräfte zu übertragen, so dass der vordere Teil des Cockpits derzeit kaum zur Steifigkeit der Zelle (Cockpit) beiträgt.

### Darstellung der Erfindung

Die Aufgabe der vorliegenden Erfindung ist es daher, die gegenläufigen Wünsche nach grosser Scheibenfläche, stabiler Bauweise, und Gewichtsminimierung in der Herstellung von Hubschrauber-Cockpits zu optimieren und ein Verfahren zur Verfügung zu stellen, welches diese Aufgabe löst.

Überraschenderweise hat sich gezeigt, dass diese Aufgabe durch ein Verfahren gemäss Anspruch 1 gelöst werden kann. Weiterhin ist es dank diesem Verfahren möglich, einen einfachen Einbau von Scheiben zu realisieren, welches es einerseits erlaubt, fertigungsbedingte Geometrieunterschiede problemlos durch den elastischen Klebstoff zu überbrücken und somit Undichtigkeiten oder Schwachstellen in der Mechanik zu verhindern und welches es andererseits erlaubt, das Cockpit durch die Scheiben zu verstärken und trotz der statischen und dynamischen Belastungen, wie sie bei Hubschraubern einzigartig sind, zu einer sicheren Cockpitstruktur führen. Die so hergestellten Cockpits weisen starke Vorteile in der Dämpfung von Vibrationen auf, was den Reisekomfort für die Insassen sowie die Gebrauchsdauer der Materialien stark erhöht. Weiterhin ist die Cockpit-Struktur bedeutend weniger anfällig auf durch Temperatur- und unterschiedliche Wärmeausdehnungskoeffizienten der verbundenen Materialien bedingten Verformungen, bzw. Spannungen. Dadurch, dass die Scheibe durch eine stark belastbare Verklebung mit der Tragprofilstruktur kraftschlüssig verbunden ist, kann zudem auf den Einsatz von mechanischen Verbindungsmitteln vollständig verzichtet werden.

Schliesslich kann auch der Vorderteil des Cockpits vermehrt lasttragend wirken, da die verklebte Scheibe eine strukturelle Versteifung und als kraftübertragendes Element zwischen Cockpit-Decken und -BodenStruktur wirkt. Dadurch kann eine bestehende Tragprofilstruktur höhere Gesamt-Nutzlasten tragen.

Schliesslich können dadurch, dass die Scheibe dank der Verklebung zu einem strukturell tragendes Element des Cockpits wird, grössere Scheiben, verwendet werden, ohne dass die Stabilität des Cockpits hierdurch reduziert wird. Andererseits kann bei gleich bleibender Scheibengrösse und -anzahl die Stärke, bzw. Versteifung, des Tragprofiles reduziert werden, was in einer Gewichtsreduktion des Tragprofiles resultiert.

Eine Reduktion des Eigengewichtes einer Tragprofilstruktur führt zu Reduktion von Treibstoffverbrauch bzw. zur Erhöhung der Nutzlast führen. Beide Effekte stellen grosse technische und finanzielle Vorteile dar.

Somit sind neben Vibrationsreduktion auch Gewichtsreduktion der Tragprofilstruktur und Erhöhung der Nutzlast des Hubschraubers wesentliche Vorteile der vorliegenden Erfindung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt ein Verfahren zum Herstellen eines Hubschrauber-Cockpits. Dieses Verfahren zeichnet sich dadurch aus, dass mindestens eine Scheibe mit der Tragprofilstruktur eines Hubschraubers mittels eines Klebstoffes, welcher ein feuchtigkeitsvernetzender einkomponentiger oder ein Isocyanatgruppen aufweisender zweikomponentiger Klebstoff ist, verklebt wird.

Die Tragprofilstruktur eines Hubschraubers ist eine rigide Struktur, welche typischerweise aus einzelnen Hohlprofilelementen zusammengesetzt ist. Die Aussen- und Innenverschalungen des Cockpits sind ihrerseits an der Tragprofilstruktur des Hubschraubers angebracht. Die Tragprofilstruktur, Aussen- und Innenverschalungen sind typischerweise aus Leichtmetall, Kunststoff- und/oder Composite-Werkstoffen gefertigt.

Die Scheiben sind insbesondere aus transparenten Kunststoffen wie Poly(methylmethacrylat) (PMMA) oder Polycarbonat (PC) oder aus Glas gefertigt. Als Scheiben aus Poly(methylmethacrylat) (PMMA) oder Polycarbonat (PC) sind auch Scheiben aus PMMA oder PC zu betrachten, welche eine Beschichtung aufweisen, wie sie beispielsweise zur Erhöhung der Kratzbeständigkeit verwendet werden.

Als Scheibe sind neben Seitenscheiben und Dachfenster, welche typischerweise in Aussparungen der Seitenabdeckung, bzw. Dachabdeckung, eingelassen sind, insbesondere die Frontscheiben zu betrachten. Die Frontscheiben sind im Vergleich zu den Seitenscheiben und Dachfenster bedeutend grossflächiger und sind von primärer Wichtigkeit für den Piloten beim Manövrieren in der Luft und sind deshalb für die Flugsicherheit von höchstem Interesse. Die Scheiben, bzw. Fenster, sind üblicherweise auf Flanschen, welche Teil der Tragprofilstruktur, bzw. der Verschalungen, sind bzw. daran befestigt sind, angeklebt. Durch diese Flansche ist eine aerodynamisch besonders günstige Verklebung realisierbar, indem die Scheibenfläche bündig mit der Tragprofilstruktur, bzw. den Verschalungen, ist.

Dadurch, dass die Scheibe aufgrund seiner Verklebung mit dem Deckenteil und dem Bodenteil der Tragprofilstruktur zur strukturelle Versteifung des Cockpits führt, "trägt" nun die Scheibe verstärkt im vordern Teil des Cockpits angeordneten Transportlasten. Somit ist es ein wesentlicher Vorteil, dass in so hergestellten Cockpits auch im vordern Cockpitteil grössere Traglasten angebracht werden können. Dies erlaubt einerseits eine höhere Gesamtlast, die eine gegebene Tragprofilstruktur aufgrund der verbesserten Gesamtstrukturdynamik der Tragprofilstruktur zu tragen vermag. Andererseits wird durch die gleichmässige Lastverteilung auch die Flugstabilität des Hubschraubers vergrössert.

Das genannte Verfahren umfasst insbesondere die folgenden Schritte:
i) Applizieren des Klebstoff auf einen Flansch der Tragprofilstruktur
ii) Kontaktieren einer Scheibe mit dem Klebstoff oder
   i') Applizieren des Klebstoff auf eine Scheibe
   ii') Kontaktieren des Klebstoffs mit einem Flansch der Tragprofilstruktur
   oder
   i") Applizieren des Klebstoff auf eine Scheibe und auf einen Flansch der Tragprofilstruktur
   ii") Zusammenfügen der mit Klebstoff applizierten Scheibe und der mit Klebstoff applizierten Tragprofilstruktur innerhalb der Offenzeit des Klebstoffs.

Als "Offenzeit" wird hierbei in diesem Dokument diejenige Zeit bezeichnet, während der eine Zusammensetzung verarbeitet werden und zur Verklebung verwendet werden kann.

Als Klebstoff werden entweder feuchtigkeitsvernetzende einkomponentige Klebstoffe oder zweikomponentige Isocyanatgruppen aufweisende Klebstoffe verwendet. Bevorzugt ist der Klebstoff ein feuchtigkeitsvernetzender einkomponentiger Klebstoff.

Zweikomponentige Isocyanatgruppen aufweisende Klebstoffe weisen eine Komponente auf, in welcher Polyisocyanate oder mindestens zwei Isocyanatgruppen aufweisende Polymere, insbesondere Isocyanatgruppen aufweisende Polyurethanpolymere, aufweisen. Die zweite Komponente stellt eine Härterkomponente, welche beispielsweise Polyole, Polymercaptane, oder Polyamine enthält, dar. Bevorzugte derartige Isocyanatgruppen aufweisende zweikomponentige Klebstoffe sind Klebstoffe, wie sie beispielsweise unter dem Handelsbezeichnungen SikaForce® von Sika Automotive GmbH vertrieben werden. Insbesondere geeignet ist SikaForce® 7550.

Als feuchtigkeitsvernetzender einkomponentiger Klebstoff geeignet sind insbesondere feuchtigkeitsreaktiver Polyurethanklebstoffe, welche auf einem mindestens zwei Isocyanatgruppen aufweisenden Polymer basieren. Es hat sich gezeigt, dass die Kombination von Elastizität und mechanischer Festigkeit äusserst vorteilhaft ist.

Derartige geeignete Klebstoffe sind beispielsweise unter den Handelsbezeichnungen Sikaflex® und SikaTack® bei Sika Schweiz kommerziell erhältlich. Als besonders gut geeignet haben sich Klebstoffe, welche nach Aushärtung eine Bruchdehnung nach DIN 53 504 von zwischen 200 und 1000 %, insbesondere von zwischen 300 und 600%, aufweisen. Die Zugfestigkeit nach Aushärtung gemäss DIN 53 504 beträgt vorzugsweise zwischen 5 MPa und 9 MPa, insbesondere zwischen 6 und 8 MPa. Weiterhin ist es äusserst vorteilhaft, wenn der Klebstoff bei 23°C nach Aushärtung ein Schubmodul gemäss DIN 54 451 zwischen 0.5 und 2.5 MPa aufweist.

Als meist bevorzugte Klebstoffe gelten die Klebstoffe Sikaflex®-250 PC und Sikaflex®-250 DM-1.

Der Klebstoff ist insbesondere pastös und thixotrop. Damit die Vorteile der vorliegenden Erfindung möglich gut zum Tragen kommen, sind dickschichtige Verklebungen bevorzugt, d.h. es ist vorteilhaft, wenn die Schichtdicke des Klebstoffs nach dem Verkleben mindestens 2 mm, insbesondere zwischen 2 mm und 6 mm, beträgt.

Um eine gute Haftung zu gewährleisten, kann es von Nöten sein, den Flansch, bzw. die Scheibe, vor dem Applizieren des Klebstoffs vorzubehandeln. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Die zwei Komponenten eines Isocyanatgruppen aufweisenden zweikomponentigen Klebstoffs reagieren miteinander nach Vermischung und führen zur Vernetzung.

Der feuchtigkeitshärtende Klebstoff reagiert mit Wasser, wodurch eine Vernetzung des Klebstoffes erfolgt. Das hierfür notwendige Wasser kann aus der Luft in Form von Luftfeuchtigkeit stammen oder aber es kann dem Klebstoff eine Wasser-haltige Paste zugemischt werden, wodurch die Aushärtung massiv beschleunigt wird. Zum Beispiel kann dem feuchtigkeitshärtenden Klebstoff, insbesondere einem der oben genannten Sikaflex®-Polyurethanklebstoffe, eine derartige Wasser-haltige Paste mittels eines Sika® Booster Dosieraufsatz, wie er kommerziell bei Sika Schweiz AG erhältlich ist, zugesetzt werden.

Nach dem Aushärten des Klebstoffes ist der Klebstoff voll belastbar und weist ein elastisches Verhalten auf. Weiterhin weisen die Klebstoffe ein hohes Mass an Rückstellverhalten auf. Die Scheiben, bzw. die Fenster, sind am Randbereich vollflächig mit der Tragprofilstruktur verklebt. Hierdurch sind keine mechanischen Verbindungsmittel mehr nötig. Zudem dichtet der Klebstoff das Cockpit vor Feuchtigkeit und Fahrtwind ab. Dadurch, dass der Klebstoff in ausgehärtetem Klebstoff elastisch ist, können Unterschiede in der Geometrie, wie auf Grund der Fertigung in der Tragprofilstruktur resultieren von bis zu einigen Millimetern problemlos überbrückt werden. Somit können die Scheiben und Fenster passgenau eingeklebt werden und insbesondere damit eine aerodynamisch günstige Cockpit-Aussenfläche erreicht werden.

Im Gegensatz zu mechanisch verbundenen Scheiben sind bei eingeklebten Scheiben die Spannungen, wie sie aufgrund der unterschiedlichen thermischen Ausdehnungskoeffizienten von Scheibe und Tragprofilstruktur, insbesondere, wenn diese aus metallischem Material gefertigt ist, sehr stark reduziert. Derartige schnelle Temperaturunterschiede finden sich beispielsweise beim Starten des Hubschraubers im Winter. Beim Starten eines anfänglich kalten (z.B. -20°C) Hubschraubers erhitzen sich gewisse Teile des Cockpits aufgrund von Reibungswärme und Abwärme des Rotors bzw. Turbine innert kurzer Zeit auf sehr hohe Temperaturen, während die Scheibentemperatur praktisch unverändert bleibt. Ein weiteres Beispiel für derartig temperaturbedingte Spannungen entstehen, wenn ein Hubschrauber durch Sonne stark aufgeheizt wird und innert kürzester Zeit grosse Höhendifferenzen (Gipfelhöhe typischerweise 5000 m. ü. M, in seltenen Fällen bis 9000 m. ü. M.) und damit grosse Aussentemperaturdifferenzen überwindet. Steiggeschwindigkeiten von zwischen 5 und 15 m pro Sekunde sind für einen Hubschrauber durchaus üblich. Die durch derartig starke Temperaturwechsel bedingten Spannungen kann ein elastischer Klebstoff aufgrund seiner Elastizität einfach ausgleichen, während dies bei mechanischen Verbindungen zu derart extrem starken Spannungsspitzen führt, dass daraus zuweilen ein Versagen des Materialverbundes resultiert.

Weiterhin werden durch das beschriebene Verfahren Vibrationen, die durch vertikale und horizontale Flugbewegungen, Wind und vor allem durch Rotor- und/oder Turbinenbewegungen bedingt sind, stark reduziert. Diese Bewegungen sind nicht nur vertikaler Natur sondern auch horizontaler Natur. Dies führt zu einem stark verbesserten Flugkomfort für die Insassen. Dies umfasst einerseits eine Dämpfung des im Innern des Cockpit wahrnehmbaren Lärms als auch anderseits der wahrnehmbaren Vibrationen, insbesondere des Cockpitbodens und der Sitze.

In einem weiteren Aspekt betrifft die Erfindung die Verwendung eines Klebstoffes, welcher ein feuchtigkeitsvernetzender einkomponentiger oder ein Isocyanatgruppen aufweisender zweikomponentiger Klebstoff ist, zur Herstellung eines Hubschrauber-Cockpits. Der hierfür geeignete Klebstoff und die aus dieser Verwendung resultierenden Vorteile wurden bereits vorgängig beschrieben.

In einem weiteren Aspekt betrifft die Erfindung ein Hubschrauber-Cockpit mit einer verklebten Scheibe. Dieses Hubschrauber-Cockpit wird nach einem bereits beschriebenen Verfahren erhalten. Insbesondere liegt hier die Verklebung als Schichtkörper mit der Materialabfolge a) / b) / c) vor:
a) Flansch einer Tragprofilstruktur des Cockpits
b) ausgehärteter Klebstoff
c) Scheibe

Wie bereits vorgängig erwähnt, kann es von Nöten sein, den Flansch, bzw. die Scheibe, vor dem vor dem Applizieren des Klebstoffs vorzubehandeln. Um eine gute Haftung zu gewährleisten ist es deshalb vorteilhaft, dass zwischen Flansch und Klebstoff und/oder zwischen Scheibe und Klebstoff ein Primer vorliegt.

### Kurze Beschreibung der Zeichnung

Im Folgenden werden anhand der Zeichnungen ausgewählte Ausführungsbeispiele der Erfindung näher erläutert. Gleiche Elemente sind in den verschiedenen Figuren mit den gleichen Bezugszeichen versehen. Die Richtung von Kräften beziehungsweise Bewegungen ist mit Pfeilen angegeben. Es sind nur die für das unmittelbare Verständnis der Erfindung wesentlichen Elemente gezeigt. Selbstverständlich ist die Erfindung nicht auf die im Folgenden gezeigten und beschriebenen Ausführungsbeispiel beschränkt.

Es zeigen:
- Fig. 1: eine perspektivische Teilansicht eines Hubschrauber-Cockpits
- Fig. 2: eine schematische Querschnitt-Darstellung einer Cockpit-Hubschrauber-Scheibenverklebung
- Fig. 3: eine perspektivische Aufrissdarstellung eines Hubschraubers
- Fig. 4: eine schematische Querschnitt-Darstellung durch ein Hubschrauber-Cockpit.

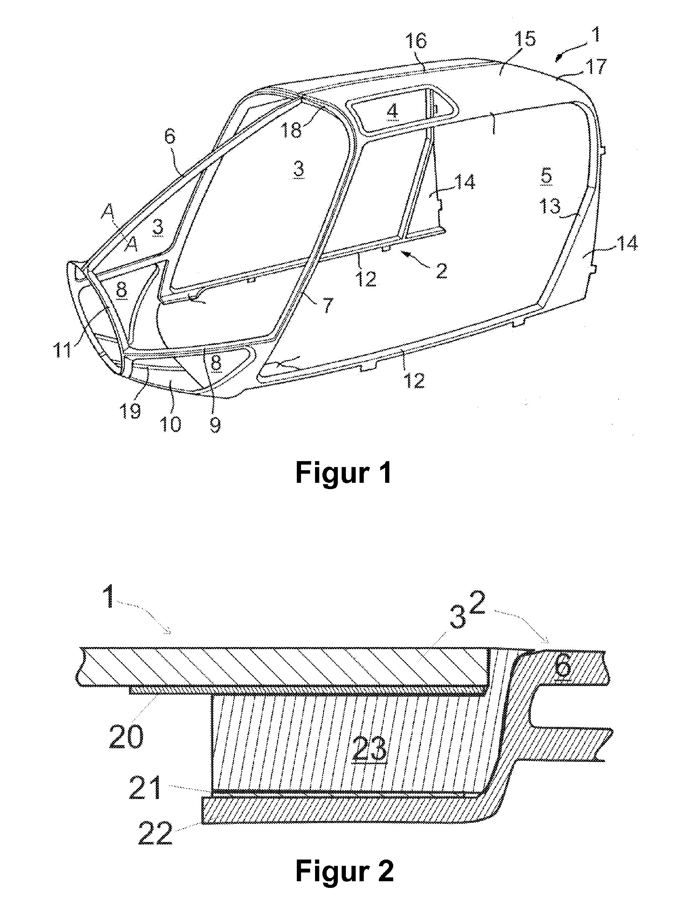

Figur 1 zeigt eine perspektivische Teilansicht eines Hubschrauber-Cockpits. Im Hubschrauber-Cockpit 1 werden Scheiben mit der Tragprofilstruktur 2 mittels eines Klebstoffs 23 verklebt. Die Tragprofilstruktur 2 weist in der hier gezeigten Ausführungsform einen Mittelpfosten 6, Seitenspanten 9, Bugspanten 11, Türspanten 12,13 sowie Dachspanten 17, 18 auf. Mittelpfosten 11, Bugspant 11, Seitenspant 9 und Türpfosten 7 begrenzen die Frontscheibenöffnung, wo die Frontscheibe 3 mit der Tragprofilstruktur 2 mittels Klebstoff 23 verklebt wird. Weitere Scheiben sind Bugfenster 8 und Dachfenster 4. Das Dachfenster 4 ist in die Dachverschalung 15 eingeklebt. Ebenfalls verklebt werden unbewegliche Teile, der Tür, wie Rahmen, welche im Türausschnitt 5 eingesetzt wird. Der Türausschnitt 5 wird durch Türpfosten 7 und Türspanten 12,13 begrenzt. Weiterhin sind Verschalungen in der Cockpitspitze und am Boden vorhanden.

Figur 2 zeigt eine schematische Querschnitt-Darstellung durch Schnitt AA in Figur 1 einer Cockpit-Hubschrauber-Scheibenverklebung. In der hier dargestellten Ausführungsform weist die Scheibe 3 im Randbereich eine Schicht Glaskeramik 20 auf. Der Klebstoff 23 verklebt die Scheibe 3 mit dem Flansch 22 der Tragprofilstruktur 2 des Cockpits 1. Der Flansch 22 ist Teil des Mittelpfostens 6. Zwischen dem ausgehärteten Klebstoff 23 und Flansch 22 ist in der hier gezeigten Ausführungsform ein Primer 21 angebracht.

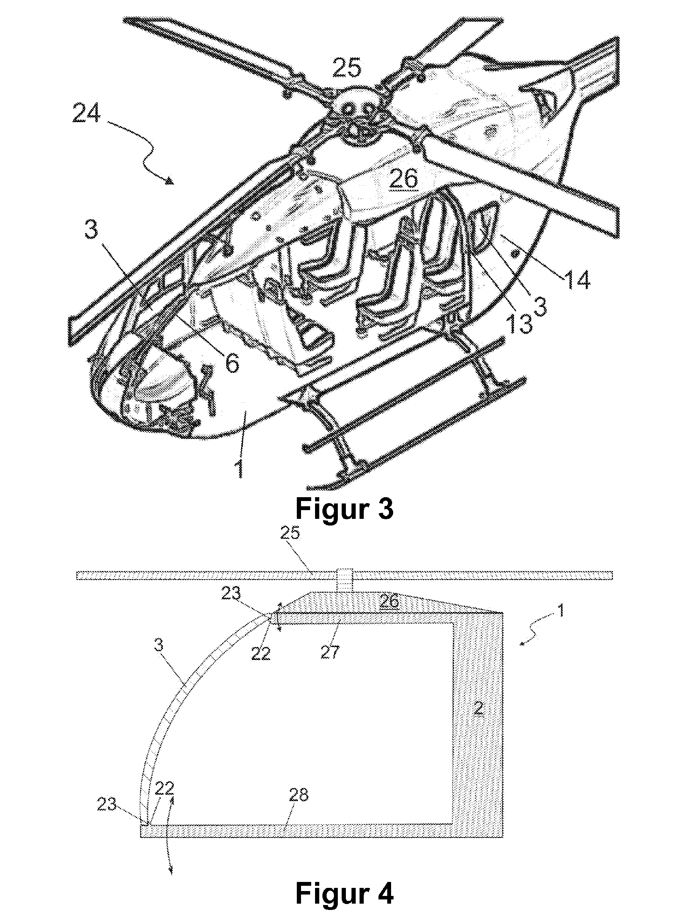

Figur 3 zeigt eine perspektivische Aufrissdarstellung eines Hubschraubers. Im Hubschrauber 24 ist im Cockpit 2 die Frontscheibe 3 am Mittelpfosten 6, bzw. die Seitenscheibe 3 mit der Seitenverschalung 14 und dem hinteren Türspant 13 verklebt. Auf dem Cockpit aufgesetzt ist der Rotor 25 und das Turbinengehäuse 26. Die Turbine und der sich drehende Rotor sind die Hauptquelle für Vibrationen im Cockpit. Durch die Verwendung von Klebstoff werden diese Vibration stark gedämpft.

Figur 4 zeigt eine schematische Darstellung eines Querschnitts durch ein Hubschrauber-Cockpit. Anhand dieser Figur soll die vorteilhafte Wirkung der Erfindung besser illustriert werden. In der stark schematisierten Tragprofilstruktur 2 werden rotor- und/oder turbinen-induzierte Schwingungen von der Zellendecke 27 über den hinteren (strukturellen) Teil der Zelle (Cockpit) auf den Zellenboden 28 übertragen. Durch die Auskragung des Zellenbodens 28 und der Zellendecke 27 geometrisch bedingt werden diese Schwingungen grundsätzlich im vorderen Bereich des Cockpits, wo sich der Pilotensitz befindet, sehr stark verstärkt. Dies wird dadurch noch verstärkt, dass in leichten und mittleren Hubschrauber im hinteren Teil des Cockpits jeweils schwere Transportlasten gelagert werden. Dadurch, dass nun jetzt aber die Scheibe 3 eine strukturelle Versteifung des Cockpits 1 übernimmt, indem der Klebstoff 23 die Scheibe 3 über Flansch 22 mit der Tragprofilstruktur 2, d.h. mit der Zellendecke 27, bzw. dem Zellenboden 28, verbunden wird, sind diese Schwingungen nicht mehr möglich, bzw. stark reduziert. Weiterhin wird dank der durch die Verklebung der Scheibe hervorgerufene strukturelle Versteifung des die Strukturdynamik des Cockpits positiv beeinflusst und auch der vordere Teil des Cockpits wirkt vermehrt lastentragend.

### Bezugszeichenliste

- 1: Hubschrauber-Cockpit
- 2: Tragprofilstruktur
- 3: Frontscheibe, Scheibe
- 4: Dachfenster
- 5: Türausschnitt
- 6: Mittelpfosten
- 7: Türpfosten
- 8: Bugfenster
- 9: Seitenspant
- 10: Bodenverschalung
- 11: Bugspant
- 12: unterer Türspant
- 13: hinterer Türspant
- 14: Seitenverschalung
- 15: Dachverschalung
- 16: Dachschalenabdichtung
- 17: hinterer Dachspant
- 18: vorderer Dachspant
- 19: Bodenverschalungsdichtung
- 20: Glaskeramik
- 21: Primer
- 22: Flansch
- 23: Klebstoff
- 24: Hubschrauber
- 25: Rotor
- 26: Turbinengehäuse
- 27: Zellendecke
- 28: Zellenboden

## Patentansprüche

1. Verfahren zum Herstellen eines Hubschrauber-Cockpits (1), **dadurch gekennzeichnet, dass** mindestens eine Scheibe (3) mit der Tragprofilstruktur (2) eines Hubschraubers (24) mittels eines Klebstoffs (23), welcher ein feuchtigkeitsvernetzender einkomponentiger oder ein Isocyanatgruppen aufweisender zweikomponentiger Klebstoff ist, verklebt wird.

2. Verfahren gemäss Anspruch 1, **dadurch gekennzeichnet, dass** es die folgenden Schritte umfasst:
i) Applizieren des Klebstoffs (23) auf einen Flansch (22) der Tragprofilstruktur (2)
ii) Kontaktieren einer Scheibe (3) mit dem Klebstoff (23)
oder
i') Applizieren des Klebstoffs (23) auf eine Scheibe (3)
ii') Kontaktieren des Klebstoffs (23) mit einem Flansch (22) der Tragprofilstruktur (2)
oder
i") Applizieren des Klebstoffs (23) auf eine Scheibe (3) und auf einen Flansch (22) der Tragprofilstruktur (2)
ii") Zusammenfügen der mit Klebstoff applizierten Scheibe und der mit Klebstoff applizierten Tragprofilstruktur innerhalb der Offenzeit des Klebstoffs.

3. Verfahren gemäss Anspruch 1 oder 2, **dadurch gekennzeichnet, dass** der Klebstoff ein feuchtigkeitsreaktiver Polyurethanklebstoff basierend auf einem mindestens zwei Isocyanatgruppen aufweisenden Polymer ist.

4. Verfahren gemäss einem der vorhergehenden Ansprüche, **dadurch gekennzeichnet, dass** der Klebstoff nach Aushärtung ein Schubmoduls bei 23°C gemäss DIN 54 451 zwischen 0.5 und 2.5 MPa aufweist.

5. Verfahren gemäss einem der vorhergehenden Ansprüche, **dadurch gekennzeichnet, dass** die Scheibe und Tragprofilstruktur über keine weiteren mechanischen Verbindungsmittel mit einander verbunden sind.

6. Verfahren gemäss einem der vorhergehenden Ansprüche, **dadurch gekennzeichnet, dass** die Scheibe aus Polycarbonat, Polymethylmethacrylat oder Glas ist.

7. Verfahren gemäss einem der vorhergehenden Ansprüche, **dadurch gekennzeichnet, dass** die Scheibe eine Frontscheibe ist.

8. Verwendung eines Klebstoffes (23), welcher ein feuchtigkeitsvernetzender einkomponentiger oder ein Isocyanatgruppen aufweisender zweikomponentiger Klebstoff ist, zur Herstellung eines Hubschrauber-Cockpits (1).

9. Verwendung gemäss Anspruch 8, **dadurch gekennzeichnet, dass** der Klebstoff ein feuchtigkeitsreaktiver Polyurethanklebstoff basierend auf einem mindestens zwei Isocyanatgruppen aufweisenden Polymer ist.

10. Verwendung gemäss Anspruch 8 oder 9, **dadurch gekennzeichnet, dass** der Klebstoff nach Aushärtung ein Schubmodul bei 23°C gemäss DIN 54 451 zwischen 0.5 und 2.5 MPa aufweist.

11. Hubschrauber-Cockpit (1) mit einer verklebten Scheibe (3).

12. Hubschrauber-Cockpit (1) gemäss Anspruch 11, **dadurch gekennzeichnet, dass** die Verklebung als Schichtkörper mit der Materialabfolge a) / b) / c) vorliegt
a) Flansch (22) einer Tragprofilstruktur (2) des Cockpits (1)
b) ausgehärteter Klebstoff (23)
c) Scheibe (3)

13. Hubschrauber-Cockpit gemäss Anspruch 11 oder 12, **dadurch gekennzeichnet, dass** zwischen Flansch (22) und Klebstoff (23) und/oder zwischen Scheibe (3) und Klebstoff (23) ein Primer (21) vorliegt.
